# EUROPEAN PATENT SPECIFICATION

(11) **EP 2 937 531 B1**
(45) Date of publication and mention of the grant of the patent: **25.01.2017**
(21) Application number: 15161324.7
(22) Date of filing: 27.03.2015
(51) Int. Cl.: F01L 3/20, F02F 1/42, F02B 31/00

(54) **INTERNAL COMBUSTION ENGINE**
VERBRENNUNGSMOTOR
MOTEUR À COMBUSTION INTERNE

(30) Priority: 31.03.2014 JP 2014071103
(43) Date of publication of application: 28.10.2015
(73) Proprietor: Toyota Jidosha Kabushiki Kaisha, Toyota-shi, Aichi-ken 471-8571 (JP)
(72) Inventor: Kamei, Nobuhiro, Osaka, 563-8651 (JP); Sasaki, Yasuji, Aichi-ken, 471-8571 (JP); Abe, Kazuyoshi, Aichi-ken, 471-8571 (JP)
(74) Representative: D Young & Co LLP

(56) References cited:
- EP-A1- 0 724 072
- DE-A1- 3 838 349
- JP-A- 2005 061 368
- JP-A- 2012 219 796

## Description

### BACKGROUND OF THE INVENTION

### 1. Field of the Invention

The invention relates to an internal combustion engine that is mounted in a vehicle or the like.

### 2. Description of Related Art

A vortex of airflow that is generated in a combustion chamber of a cylinder and that spins vertically, that is, a so-called tumble flow is important for intake air and fuel to be mixed well and to increase a flame propagation velocity in the combustion chamber. For example, in an internal combustion engine disclosed in Japanese Patent Application Publication No. 2013-083218 (JP 2013-083218 A), a ceiling section of a combustion chamber is provided with a pair of guide walls that extends from an opening of an intake port to an opening of an exhaust port. In JP 2013-083218 A, a separation distance between the guide walls is gradually reduced from the intake port side toward the exhaust port side. In this way, a flow velocity of intake air that enters from the intake port and flows toward a center axis of a cylinder or the exhaust port side is increased, and thus a tumble flow is intensified.

However, as in the invention described in JP 2013-083218 A above, when the separation distance between the paired guide walls is simply reduced toward the exhaust port side, clearance between the guide wall and a valve body of an intake valve is also reduced. For this reason, a flow rate of the intake air is possibly reduced, and thus the tumble flow is possibly weakened.

### SUMMARY OF THE INVENTION

The invention provides an internal combustion engine that intensifies a tumble flow in a combustion chamber of a cylinder.

An aspect of the invention is an internal combustion engine that includes: a cylinder defining a combustion chamber; a ceiling section of the combustion chamber connected to each of an intake port and an exhaust port, intake air flowing into the combustion chamber through the intake port and exhaust gas is discharged from the combustion chamber; a guide wall provided in the ceiling section of the combustion chamber and the guide wall being connected to a first opening of the intake port and a second opening of the exhaust port; and a recess provided in a portion of the guide wall and the recess is recessed in a direction to separate from a center axis of the cylinder, so as to increase an internal volume of the combustion chamber. In the internal combustion engine, an internal surface of the recess is inclined such that a lower end of the recess is farther away from the center axis of the cylinder than an upper end of the recess, and the recess is recessed the most at a second position where the recess crosses a first tangent of the first opening, the first tangent contacting a first portion of the first opening of the intake port, and the first portion being the closest portion of the first opening to the exhaust port, in a plan view in which the ceiling section is seen in a direction of the center axis of the cylinder. It should be noted that the lower end of the recess is an end of the recess on a cylinder side.

In the internal combustion engine, a degree of the recess may be gradually reduced toward the second opening of the exhaust port, and the recess may be recessed in a range from a position to a third position, in the plan view in which the ceiling section is seen in the direction of the center axis of the cylinder. The recess may contact the first opening at the first position. The third position may be closer to the intake port than a position where guide wall is in contact with the second opening of the exhaust port. The third position may be a position where the recess crosses a second tangent of the second opening, the second tangent may contact a second portion of the second opening that is the closest portion of the second opening to the intake port.

According to the above configuration, it is possible to intensify a tumble flow in the combustion chamber of the cylinder in the internal combustion engine.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a side cross-sectional view of an intake port and a ceiling section of a combustion chamber in an internal combustion engine according to an embodiment of the invention;
FIG. 2 is a side cross-sectional view that schematically shows a flow of intake air in the intake port in the internal combustion engine according to the embodiment;
FIG. 3 is an end view that is taken along line III-III and shows a cross-sectional shape of an opening of a main flow passage section of the intake port in the internal combustion engine according to the embodiment;
FIG. 4 is a side cross-sectional view of main components in which an opening of the intake port and a valve seat in the internal combustion engine according to the embodiment are enlarged;
FIG. 5 is a perspective view of an internal shape of the ceiling section of the combustion chamber in the internal combustion engine according to the embodiment;
FIG. 6 is a plan view of the internal shape of the ceiling section of the combustion chamber in the internal combustion engine according to the embodiment;
FIG. 7 is a plan view that schematically shows the flow of the intake air in the ceiling section of the combustion chamber in the internal combustion engine according to the embodiment;
FIG. 8 is an end view that is taken along line VIII-VIII and shows the ceiling section of the combustion chamber in the internal combustion engine according to the embodiment; and
FIG. 9 is an end view that is taken along line IX-IX and shows the ceiling section of the combustion chamber in the internal combustion engine according to the embodiment.

### DETAILED DESCRIPTION OF EMBODIMENTS

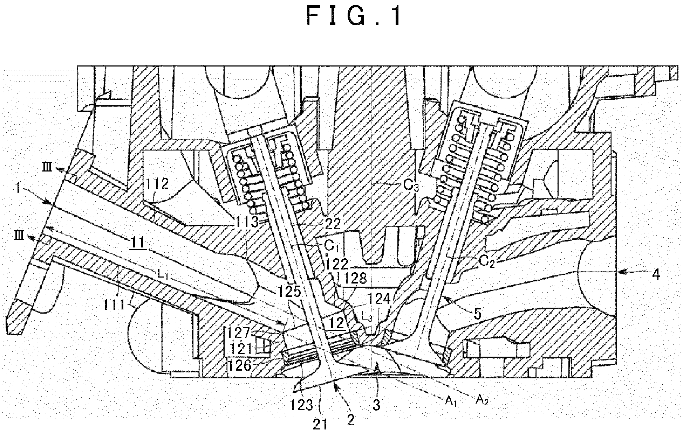

A description will be made on an embodiment of the invention with reference to the drawings. An internal combustion engine of the embodiment is an in-line three-cylinder internal combustion engine of port injection type. FIG. 1 to FIG. 4 show a ceiling section 3 of a combustion chamber, and an intake port 1 that is disposed in a cylinder head of the internal combustion engine in the embodiment.

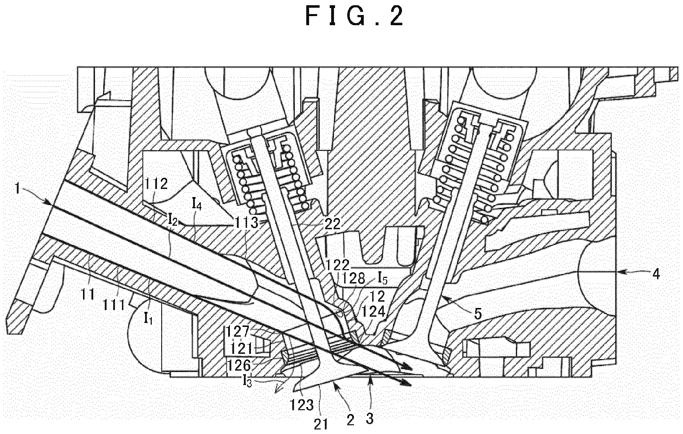

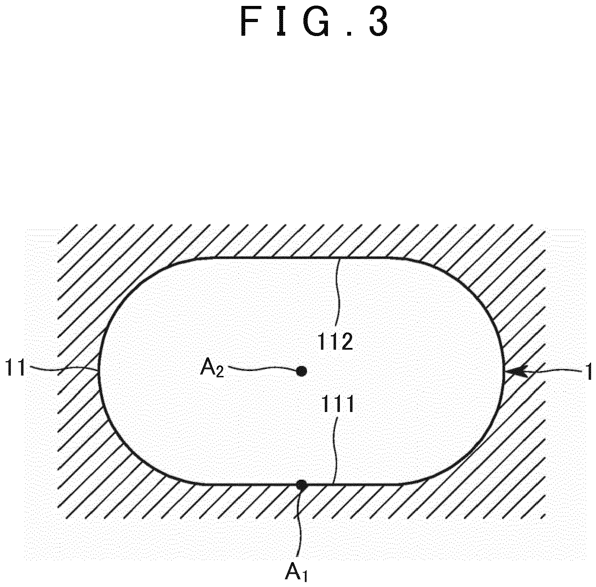

FIG. 1 and FIG. 2 are cross-sectional views in each of which the cylinder head is cut by a vertical cross section that runs a center axis C₁ of a valve body 2 of an intake valve and a center axis C₂ of a valve body 5 of an exhaust valve, and that is parallel to a center axis C₃ of a cylinder. The center axis C₁ is an axis that runs a center of a shaft section (a valve stem) 22 and extends along an advancing/retracting direction of the valve body 2. The center axis C₃ is an axis that runs a center of a bore wall and extends along an advancing/retracting direction of a piston (not shown). FIG. 3 is an end view that is taken along line III-III and shows a shape of an opening of a main flow passage section 11 of the intake port 1 in the same cylinder head. The valve body 2 of the intake valve in FIG. 1 is in a state of a maximum lift amount in which an opening degree of the intake valve, that is, a separation distance between an umbrella section 21 and a valve seat 123 becomes the maximum.

The intake port 1 includes the main flow passage section 11 and a throat section 12. The main flow passage section 11 leads intake air into a combustion chamber of the cylinder. The throat section 12 is interposed and communicates between the main flow passage section 11 and the ceiling section 3 of the combustion chamber. Each of a lower surface (a surface on a side that is close to the combustion chamber) 111 and an upper surface (a surface on a side that is far from the combustion chamber) 112 of the main flow passage section 11 of the intake port 1 is a flat surface that is inclined in a manner to extend toward the combustion chamber. Since an injector for fuel injection (not shown) is mounted on an upper side of the intake port 1, a portion of the upper surface 112 of the main flow passage section 11 is provided with a recess 113 that is recessed upward. A tip of the injector is housed in this recess 113 such that said injector is suppressed from interfering with a flow of the intake air. The lower surface 111 and the upper surface (other than the recess 113 for mounting of the injector) 112 of the main flow passage section 11 are substantially parallel to each other. However, strictly speaking, the lower surface 111 is more horizontal (closer to a surface that is orthogonal to the center axis C₃ of the cylinder) than the upper surface 112.

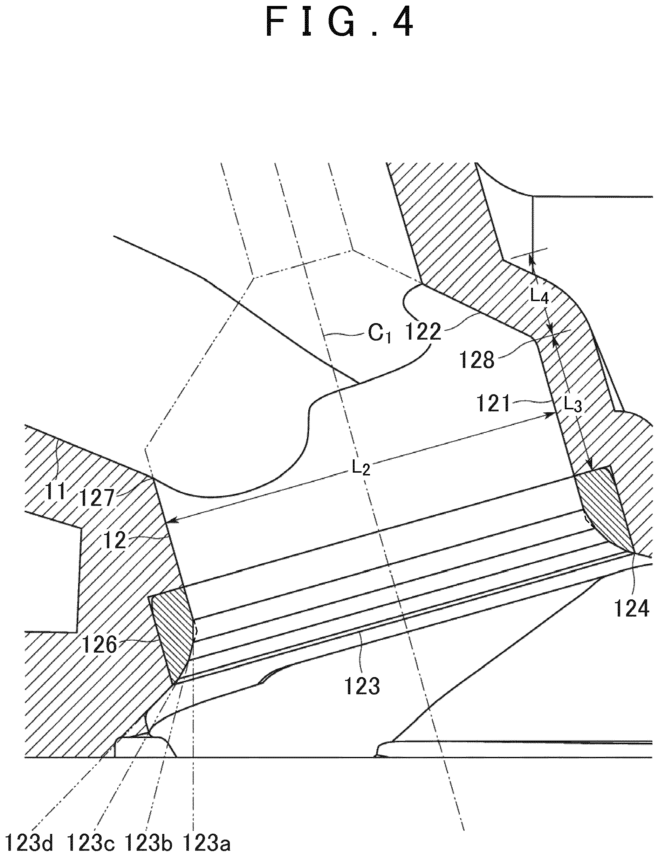

For a purpose of intensifying a tumble flow that is generated in the combustion chamber of the cylinder, the lower surface 111 of the main flow passage section 11 linearly extends to the throat section 12. An extended line A₁ that is defined by extending a lower edge of the main flow passage section 11 (a lowermost edge of the main flow passage section 11) toward the center axis of the cylinder is located above (on an opposite side from the combustion chamber) the umbrella section 21 of the valve body 2 of the intake valve in the state of the maximum lift amount. Accordingly, as shown in FIG. 2, an intake air I₁ that flows along the lower surface 111 of the main flow passage section 11 can vigorously flow into the combustion chamber while being straightened and avoided from colliding with the umbrella section 21 of the valve body 2 of the intake valve as much as possible. A length L₁ of the lower surface (the lower edge) 111 of the main flow passage section 11 that is in a linear shape in the side cross-sectional view is longer than three times a length of an internal diameter L₂ of a base section 121 of the throat section 12, which is shown in FIG. 4.

In addition, an extended line A₂ that is defined by extending a middle line located in the vicinity of the middle of the upper surface (the upper edge) 112 and the lower surface (the lower edge) 111 of the main flow passage section 11 toward the combustion chamber is located below (on the combustion chamber side) a portion 124 of the valve seat 123. The valve body 2 of the intake valve is seated on the valve seat 123. The portion 124 is the closest part of the valve seat 123 to the exhaust port 4. Accordingly, as shown in FIG. 2, an intake air I₂ that is distributed in the main flow passage section 11 can vigorously flow into the combustion chamber while being avoided from colliding with said portion 124 of the valve seat 123 (and the umbrella section 21 of the valve body 2 of the intake valve) as much as possible. Distances from the above middle line to the lower surface 111 and the upper surface 112 other than the recess 113 for mounting of the injector of the main flow passage section 11, each of which is in the linear shape in the side cross-sectional view, are substantially equal to each other. An inclined angle of the middle line is substantially at the middle of an inclined angle of the lower surface 111 and an inclined angle of the upper surface 112 of the main flow passage section 11. In other words, the middle line is more horizontal than the upper surface 112 and more perpendicular than the lower surface 111.

The throat section 12 has such a shape that a head section 122 in a partially truncated conical shape is provided on top of the cylindrical base section 121. The valve seat 123 of the intake valve is provided at a lower end of the base section 121. The lower surface 111 of the main flow passage section 11 crosses and is continuously connected to the base section 121 of the throat section 12. The lower surface 111 of the main flow passage section 11 crosses an internal circumferential surface of the base section 121 of the throat section 12 at a crossing position 127 while being bent (to describe in an extreme manner, a "pin angle" with a pointed tip is defined). In other words, the lower surface 111 of the main flow passage section 11 and the internal circumferential surface of the base section 121 of the throat section 12 are not smoothly connected via a curved surface. In this way, as shown in FIG. 2, when reaching the throat section 12 from the main flow passage section 11, the intake air I₁ that flows along the lower surface 111 of the main flow passage section 11 separates from the internal circumferential surface of the base section 121 of the throat section 12. This separation of the flow of the intake air I₁ causes a reduction in a flow rate of a flow I₃ that is curved toward the bore wall side of the cylinder (an external side along a radial direction of the cylinder) in a manner to avoid the valve body 2 of the intake valve. The flow I₃ that enters the combustion chamber after being curved toward the bore wall side generates a reverse tumble flow that swirls in an opposite direction from a tumble flow generated by the flows I₁, I₂ that flow linearly toward the center axis C₃ (or the exhaust port 4) side of the cylinder along an upper surface of the umbrella section 21 of the valve body 2 in the intake valve. The reduction in the flow rate of the flow I₃ that is curved toward the bore wall side leads to intensification of the desired tumble flow.

An upper edge 125 of the base section 121 of the throat section 12 is located at substantially the same height from the valve seat 123 for an entire circumference of the base section 121. The lower surface 111 of the main flow passage section 11 contacts this upper edge 125. The head section 122 of the throat section 12 also contacts this upper edge 125. An internal diameter at a lower end of the head section 122 in the partially truncated conical shape is equal to the internal diameter of the cylindrical base section 121. As shown in FIG. 1 and FIG. 2, an upper edge of the head section 122 of the throat section 12 in the cross section and the upper edge of the main flow passage section 11 are substantially aligned on the same line. The upper edge of the head section 122 of the throat section 12 in the cross section is an uppermost edge in a partially truncated conical shape. The upper edge of the main flow passage section 11 is an uppermost edge in the upper surface 112 other than the recess 113 for mounting of the injector. As shown in FIG. 4, a height dimension L₄ of the head section 122 that is along the center axis C₁ direction of the valve body 2 of the intake valve is smaller than a height dimension L₃ of the base section 121 that is along the same axis C₁ direction. The center axis C₁ of the valve body 2 of the intake valve is also a center axis of the base section 121 of the throat section 12.

An internal circumferential surface of the base section 121 and an internal circumferential surface of the head section 122 cross each other while being bent at a crossing position 128, at which the base section 121 of the throat section 12 crosses and is continuously connected to the head section 122. In other words, the internal circumferential surface of the base section 121 and the internal circumferential surface of the head section 122 are not smoothly connected via a curved surface. This seems to cause turbulence of an intake air I₄ that flows along the upper surface 112 of the main flow passage section 11 and further become an obstructive factor for an entire flow of the intake air. However, as shown in FIG. 2, it has become apparent from a simulation experiment by a computing system that a small vortex I₅ of airflow is generated at an internal corner of the crossing position 128 between the base section 121 and the head section 122 of the throat section 12. Since this vortex I₅ functions as an air cushion, for example, the intake air I₄ that flows along the upper surface 112 of the main flow passage section 11 can smoothly be guided to the combustion chamber. As a result, although the crossing position 128 between the base section 121 and the head section 122 of the throat section 12 has a bent shape, it is possible to secure a necessarily and sufficiently high flow rate of the intake air and a necessarily and sufficiently high tumble ratio.

If the height dimension L₃ of the base section 121 of the throat section 12 is too small, the intake air that flows along the lower surface 111 of the main flow passage section 11 collides with the umbrella section 21 of the valve body 2 of the intake valve. Then, some of the collided intake air is headed toward the crossing position 128 between the base section 121 and the head section 122 of the throat section 12. For this reason, the flow is stagnated at said crossing position 128, and the tumble flow is weakened. On the contrary, if the height dimension L₃ of the base section 121 of the throat section 12 is too large, the intake air that flows through the main flow passage section 11 collides with the portion 124 of the valve seat 123 that is closest to the exhaust port 4. At this time, a tendency that the flow of the intake air is further bent downward in a course from the main flow passage section 11 to the throat section 12 is increased. As a result, in conjunction with the collision with the umbrella section 21 of the valve body 2 of the intake valve, pressure loss is increased, and thus the flow rate of the intake air is reduced.

The throat section 12 is shaped by cutting the cylinder head as a cast member by using a sheet cutter. The above-described shape of the throat section 12 contributes to easiness of processing and shaping, improved processing accuracy, and a reduction in processing cost. If the base section 121 of the throat section 12 has an inner circumferential shape that is narrowed upward, an oblique drill for cutting such an inner circumferential shape is required. However, the oblique drill is not required for the base section 121 that has the cylindrical inner circumferential shape. In addition, even if errors in the shapes and dimensions of the main flow passage section 11 that is formed by using a core during casting of the cylinder head and of the throat section 12 (before being cut by the sheet cutter) with respect to design values or variations in the shapes and dimensions of the main flow passage section 11 and the throat section 12 among individual pieces are generated, the base section 121 and the head section 122 of the throat section 12 can easily conform to the correct design shapes and dimensions through processing, that is, the errors and variations can easily be corrected. This leads to improved performance of the internal combustion engine.

As shown in FIG. 2, when the flows I₁, I₂ that generate the desired tumble flow are intensified while the flow I₃ that generates the reverse tumble flow is weakened, there is a case where the flow rate of the intake air by the latter flow I₃ is reduced, that is, where filling efficiency of the intake air to the cylinder is degraded.

In view of the above, in this embodiment, as shown in FIG. 4 in an enlarged manner, four steps of tapered surfaces (valve hitting surfaces) 123a, 123b, 123c, 123d are provided in the valve seat 123, on which the umbrella section 21 of the valve body 2 of the intake valve is seated. In this way, the flow rate of the intake air that flows into the combustion chamber from the intake port 1 is increased. These tapered surfaces 123a, 123b, 123c, 123d are shaped in a seat ring 126 that is fitted to a lower end of the throat section 12 of the cylinder head as the cast member. Angles defined by the tapered surfaces 123a, 123b, 123c, 123d and the center axis C₁ of the valve body 2 of the intake valve are respectively 30°, 60°, 90°, and 120° in an order from the tapered surface 123a that is located the highest of all. The tapered surfaces 123a, 123b, 123c, 123d are formed by being cut in an order from above. If the highest tapered surface 123a does not exist, the tapered surfaces of the valve seat of the intake valve in the internal combustion engine are provided in three steps, and angles defined by the tapered surfaces and the center axis C₁ of the valve body 2 of the intake valve are respectively 60°, 90°, and 120°. The tapered surface 123b becomes the highest tapered surface, and this surface 123b crosses a cylindrical internal circumferential surface of the seat ring 126. In this case, a cross-sectional area of an opening of the seat ring 126, that is, a flow passage of the intake air is narrowed by a portion indicated by dashed line in FIG. 4. In the valve seat 123 of the intake valve in the internal combustion engine of this embodiment, the highest tapered surface 123a is added, and thus the four steps of the tapered surfaces are provided. Accordingly, the portion indicated by the dashed line in FIG. 4 is omitted, so as to enlarge the flow passage of the intake air.

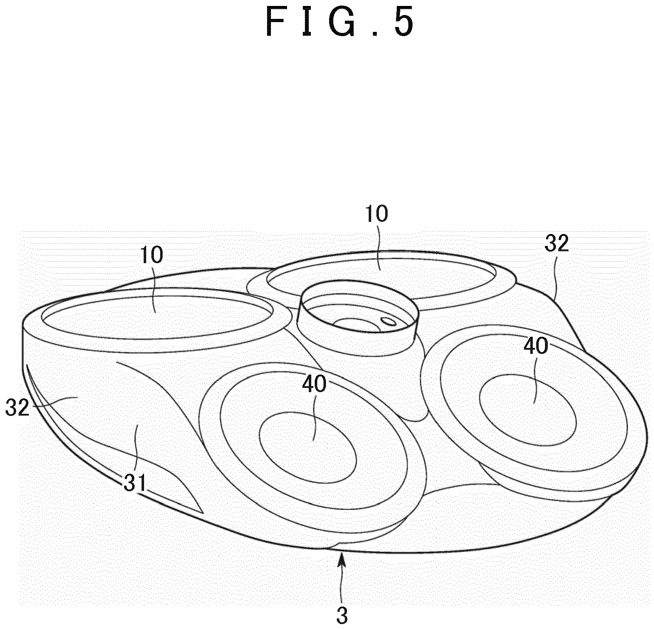

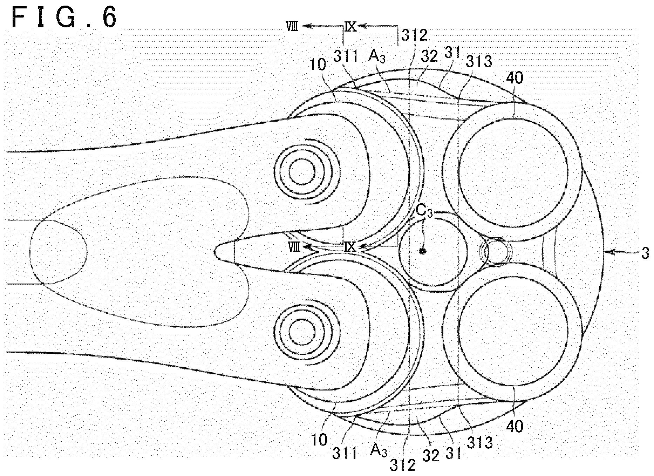

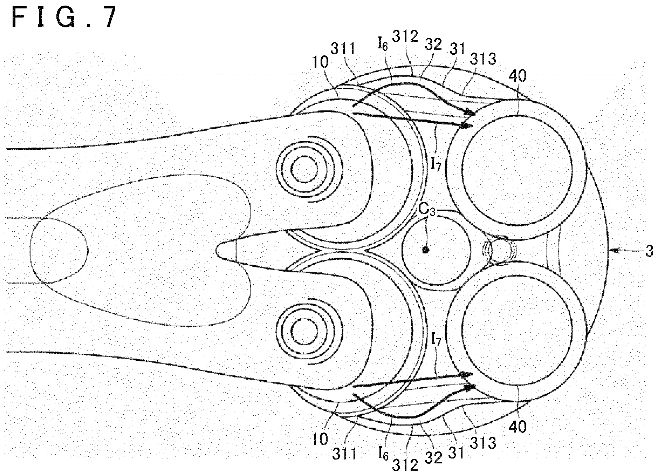

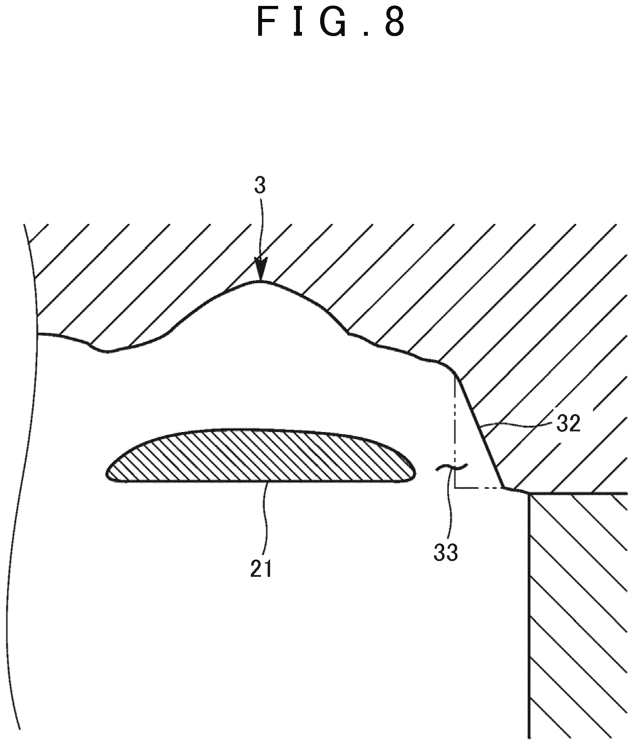

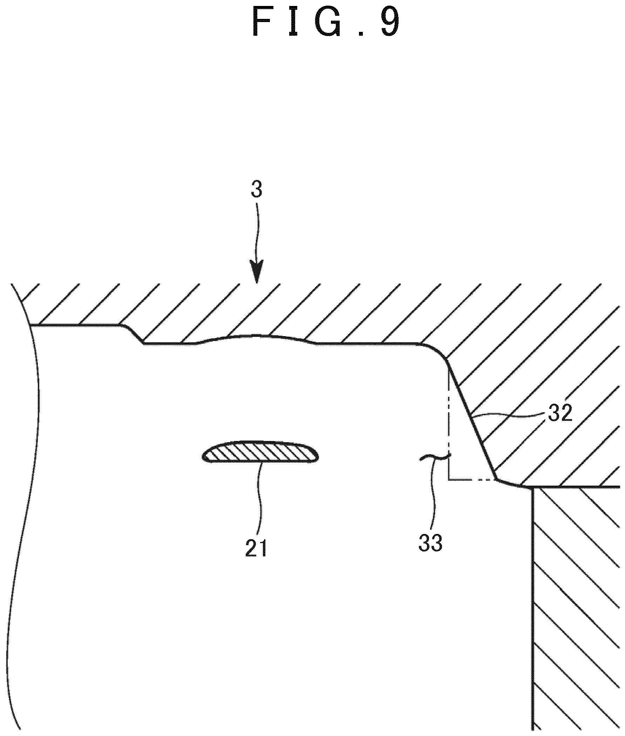

FIG. 5 is a perspective view of an internal shape (a shape of an internal space, a volume shape) of the ceiling section of the combustion chamber, and FIG. 6 and FIG. 7 are plan views in which the internal shape of the ceiling section of the combustion chamber is seen in a direction along the center axis C₃ of the cylinder. These FIG. 5 to FIG. 7 show a shape of an internal wall of the ceiling section of the combustion chamber. FIG. 8 is an end view that is taken along line VIII-VIII and shows the ceiling section of the combustion chamber, and FIG. 9 is an end view that is taken along line IX-IX and shows the ceiling section of the combustion chamber.

Each of the intake port 1, through which the intake air flows into the combustion chamber, and the exhaust port 4, through which exhaust gas is discharged from the combustion chamber, is continuously connected to the ceiling section 3 of the combustion chamber of the cylinder. An opening 10 of the intake port 1 in the ceiling section 3 of the combustion chamber corresponds to the valve seat 123 or a portion in the vicinity thereof that is located at the lower end of the throat section 12 of the intake port 1. An opening 40 of the exhaust port 4 corresponds to a valve seat, on which the valve body 5 of the exhaust valve is seated, or a portion in the vicinity thereof that is located at a lower end of a throat section of the exhaust port 4. A portion at the middle of the opening 10 of the intake port 1 and the opening 40 of the exhaust port 4 is the highest of the ceiling section 3 of the combustion chamber, and the ceiling section 3 of the combustion chamber is lowered toward the exhaust port 4 or the intake port 1.

In this embodiment, a guide wall 31 that contacts both of the opening 10 of the intake port 1 and the opening 40 of the exhaust port 4 in the ceiling section 3 of the combustion chamber is provided. Then, a portion of the guide wall 31 is formed with a recess 32 that is recessed in a direction to separate from the center axis C₃ of the cylinder (the external side along the radial direction of the cylinder) so as to increase an internal volume of the combustion chamber. This recess 32 has a shape that swells laterally to the outside along a direction in which the plural cylinders are aligned (an orthogonal direction to a direction in which the intake port 1 and the exhaust port 4 are aligned) from a tangent A₃ that contacts both of the opening 10 of the intake port 1 and the opening 40 of the exhaust port 4 in the cross section.

A degree of the recess 32, that is, a separation distance between the guide wall 31 and the above tangent A₃ is gradually increased from a position 311 where the recess 32 contacts the opening 10 of the intake port 1 toward the exhaust port side, and becomes the maximum on a side 312 in the vicinity of the portion of the opening 10 of the intake port 1 that is closest to the exhaust port 4. In other words, in a plan view in which the ceiling section 3 is seen in a direction of the center axis of the cylinder, the recess 32 is the greatest at a position (the side 312) where the recess 32 crosses a tangent of the opening 10 that contacts the portion of the opening 10 of the intake port 1 that is closest to the exhaust port 4. The degree of the recess 32 is the greatest on the side 312, is gradually reduced toward the opening 40 of the exhaust port 4, and becomes zero on a side 313 in the vicinity of a portion of the opening 40 of the exhaust port 4 that is closest to the intake port 1. That is, the recess 32 does not reach the side 313 in the vicinity of the portion of the opening 40 of the exhaust port 4 that is closest to the intake port 1. In other words, the recess 32 is recessed in a range from the position where the recess 32 contacts the opening 10 of the intake port 1 to a position on the intake port side from a position where the recess 32 crosses the tangent of the opening 40 that contacts the portion of the opening 40 of the exhaust port 4 that is closest to the intake port 1. In this way, as shown in FIG. 7, the flow of the intake air that flows into the combustion chamber from the opening 10 of the intake port 1 is divided into a flow I₆ along the guide wall 31 and the recess 32 thereof and a flow I₇ that flows linearly from the same opening 10 of the intake port 1 toward the exhaust port 4 side. This is efficient in securing the necessary and sufficient flow rate of the intake air that flows into the combustion chamber from the opening 10 of the intake port 1. Then, the former flow I₆ and the latter flow I₇ are merged at a position before the opening 40 of the exhaust port 4, and thus the intensive flow at the high flow rate is generated. This flow further generates the favorable tumble flow.

As shown in FIG. 8 and FIG. 9, an internal surface of the recess 32 is inclined such that a lower end thereof is farther away from the center axis C₃ of the cylinder than an upper end thereof, that is, that the lower end is closer to the bore wall of the cylinder than the upper end. Accordingly, clearance 33 between the internal surface of the recess 32 and an outer circumference of the umbrella section 21 of the valve body of the intake valve is extended to a certain degree, and is adjusted such that a flow velocity of the intake air passing through said clearance 33 does not become too high. If the internal surface of the recess 32 is a surface that is not inclined but is perpendicular as illustrated by a two-dot chain line in FIG. 8 and FIG. 9, the clearance 33 between the internal surface of the recess 32 and the outer circumference of the umbrella section 21 of the valve body of the intake valve becomes narrow. Thus, the flow velocity of the intake air that flows through said clearance 33 possibly becomes too high. In this case, the airflow that should become the tumble flow reaches the bore wall of the cylinder that is further ahead of the opening 40 of the exhaust port 4 when seen from the intake port 1 side, the tumble flow spinning vertically in the combustion chamber. Then, the turbulence of the airflow is caused by collision with the bore wall, and thus the airflow does not become the favorable tumble flow. As a result, the tumble ratio is possibly reduced. For this reason, the inclined internal surface of the recess 32 functions to prevent such a reduction in the tumble ratio.

In this embodiment, the internal combustion engine is configured that: each of the intake port 1, through which the intake air flows into the combustion chamber, and the exhaust port 4, through which the exhaust gas is discharged from the combustion chamber, is continuously connected to the ceiling section 3 of the combustion chamber of the cylinder; the guide wall 31 that contacts both of the opening 10 of the intake port 1 and the opening 40 of the exhaust port 4 in the ceiling section 3 of the combustion chamber is provided; the recess 32, which is recessed in the direction to separate from the center axis C₃ of the cylinder so as to increase the internal volume of the combustion chamber, is formed in the portion of the guide wall 31; the internal surface of the recess 32 is inclined such that the lower end thereof is farther away from the center axis C₃ of the cylinder than the upper end thereof; and the recess 32 is recessed the most on the side 312 in the vicinity of the portion of the opening 10 of the intake port 1 that is closest to the exhaust port 4 in the plan view in which the ceiling section 3 of the combustion chamber is seen in the direction of the center axis C₃ of the cylinder.

According to this embodiment, the flow rate of the intake air in the portion of the opening 10 of the intake port 1 on the exhaust port 4 side, in which the flow velocity of the intake air is relatively high, can be increased. In addition, the internal surface of the recess 32 is inclined such that the lower end of said recess 32 separates from the center axis C₃ of the cylinder and approaches the bore wall of the cylinder. Thus, the turbulence of the flow of the intake air flowing into the combustion chamber that is caused by the collision with the guide wall 31 (or the internal surface of the recess 32) or a bore wall surface of the cylinder can be suppressed. This contributes to intensification of the tumble flow.

The degree of the recess 32 is gradually reduced toward the opening 40 of the exhaust port 4, and the recess 32 does not reach the side 313 in the vicinity of the portion of the opening 40 of the exhaust port 4 that is closest to the intake port 1. Accordingly, the intake air that flows along the recess 32 is suppressed from being spread, and the tumble flow can further be intensified. Furthermore, the recess 32 is not provided in the vicinity of the opening 40 of the exhaust port 4 that becomes a relatively high temperature. This is meaningful in a point that a space that is likely to induce knocking (the recess 32 in here) is not provided in the vicinity of the opening 40 of the exhaust port 4. This is also important for squish in which the intake air in the vicinity of the bore wall of the cylinder (a circumferential edge of the combustion chamber) is collected on the center axis C₃ side of the cylinder (at a center of the combustion chamber) at the end of a compression stroke. The squish also contributes to suppression of the knocking.

In this embodiment, the internal combustion engine is configured that: the intake port 1 includes the main flow passage section 11, through which the intake air is distributed toward the combustion chamber of the cylinder, and the throat section 12 interposed between the main flow passage section 11 and the combustion chamber and continuously connect the main flow passage section 11 and the combustion chamber; the lower edge of the main flow passage section 11 is shaped linearly; the extended line A₁ that is defined by extending the lower edge thereof toward the combustion chamber is located above the umbrella section 21 of the valve body 2 of the intake valve in the state of the maximum lift amount; the crossing position 127 between the lower edge of the main flow passage section 11 and the throat section 12 is shaped in a bent shape; and the extended line A₂ that is defined by extending the middle line located in the vicinity of the middle of the upper edge and the lower edge of the main flow passage section 11 toward the combustion chamber is located below the portion 124 of the valve seat 123, on which the valve body 2 of the intake valve is seated, that is closest to the exhaust port 4.

According to this embodiment, the intake air flows along the main flow passage section 11 of the intake port 1 and linearly flows into the combustion chamber. Thus, the collision of said intake air with the valve seat 123 or the valve body 2 of the intake valve is alleviated or avoided. In addition, since the flow toward the exhaust port 4 side is not interfered in the combustion chamber, the tumble flow that is generated in the combustion chamber can be intensified.

Furthermore, the throat section 12 has the base section 121, an internal circumference of which is cylindrical, and the upper edge 125 thereof is located at substantially the same height from the valve seat for the entire circumference of the base section 121. Thus, the throat section 12 can be shaped by simple processing, and the variations in the shape and the dimension of a finished article thereof can be reduced. In other words, since the differences among the individual pieces of the cylinder head can be reduced, the cylinder head is suited for mass production.

The throat section 12 has the head section 122 on top of the base section 121, and the head section 122 has an internal circumference in a partially truncated conical shape. In addition, the crossing position 128 between the base section 121 and said head section 122 is shaped in the bent shape. Accordingly, the intake air that flows along the upper surface of the main flow passage section 11 of the intake port 1 can smoothly be guided into the combustion chamber, and thus the tumble flow can be intensified. At this time, the pressure loss is reduced, and the flow rate of the intake air is increased.

The invention is not limited to the embodiment that has been described in detail so far. Various modifications can be made to a specific configuration of each component within the scope of the invention.

The invention can be applied to an internal combustion engine that is mounted in a vehicle or the like.

## Claims

1. An internal combustion engine comprising:
a cylinder defining a combustion chamber;
a ceiling section (3) of the combustion chamber connected to each of an intake port (1) and an exhaust port (4), intake air flowing into the combustion chamber through the intake port and exhaust gas being discharged from the combustion chamber;
a guide wall (31) provided in the ceiling section of the combustion chamber and the guide wall being connected to a first opening (10) of the intake port and a second opening (40) of the exhaust port; and
a recess (32) provided in a portion of the guide wall and the recess being recessed in a direction to separate from a center axis of the cylinder, so as to increase an internal volume of the combustion chamber, wherein
an internal surface of the recess is inclined such that a lower end of the recess is farther away from the center axis of the cylinder than an upper end of the recess, and
the recess is recessed the most at a second position (312) where the recess crosses a first tangent of the first opening, the first tangent contacts a first portion of the first opening of the intake port, and the first portion being the closest portion of the first opening to the exhaust port, in a plan view in which the ceiling section is seen in a direction of the center axis of the cylinder.

2. The internal combustion engine according to claim 1, wherein
a degree of the recess is gradually reduced toward the second opening of the exhaust port, and
the recess is recessed in a range from a first position (311) to a third position (313), the recess contacts the first opening at the first position, the third position is closer to the intake port than a position where the guide wall is in contact with the second opening of the exhaust port, the third position is a position where the recess crosses a second tangent of the second opening, the second tangent contacts a second portion of the second opening that is the closest portion of the second opening to the intake port, in the plan view in which the ceiling section is seen in the direction of the center axis of the cylinder.

## Patentansprüche

1. Maschine mit interner Verbrennung mit:
einem Zylinder, der eine Brennkammer definiert;
einem Dachabschnitt (3) der Brennkammer, der mit sowohl einem Einlassanschluss (1) als auch einem Auslassanschluss (4) verbunden ist,
wobei Ansaugluft durch den Einlassanschluss in die Brennkammer fließt und
Abgas durch den Auslassanschluss aus der Brennkammer abgegeben wird;
einer Führungswand (31), die im Dachabschnitt der Brennkammer vorgesehen ist, und wobei die Führungswand mit einer ersten Öffnung (10) des Einlassanschlusses und einer zweiten Öffnung (40) des Abgasanschlusses verbunden ist; und
einer Aussparung (32), die in einem Abschnitt der Führungswand vorgesehen ist, und wobei die Aussparung in einer Richtung ausgespart ist, um sich von einer Mittelachse des Zylinders so zu trennen, dass sie ein Innenvolumen der Brennkammer erhöht, wobei
eine Innenfläche der Aussparung so geneigt ist, dass ein unteres Ende der Aussparung weiter von der Mittelachse des Zylinders weg ist als ein oberes Ende der Aussparung, und
die Aussparung an einer zweiten Position (312) am stärksten ausgespart ist,
an der die Aussparung eine erste Tangente der ersten Öffnung kreuzt, die erste Tangente einen ersten Abschnitt der ersten Öffnung des Ansauganschlusses berührt, und der erste Abschnitt der Abschnitt der ersten Öffnung ist, der in einer Draufsicht, in der der Dachabschnitt aus einer Richtung der Mittelachse des Zylinders gesehen wird, am nächsten beim Auslassanschluss liegt.

2. Maschine mit interner Verbrennung nach Anspruch 1, wobei ein Grad der Aussparung hin zur zweiten Öffnung des Auslassanschlusses allmählich verringert wird, und
die Aussparung in einem Bereich von einer ersten Position (311) zu einer dritten Position (313) ausgespart ist, die Aussparung die erste Öffnung an der ersten Position berührt, die dritte Position sich näher am Einlassanschluss befindet als eine Position, an der die Führungswand mit der zweiten Öffnung des Auslassanschlusses in Verbindung ist, die dritte Position eine Position ist, an der die Aussparung eine zweite Tangente der zweiten Öffnung kreuzt, wobei die zweite Tangente einen zweiten Abschnitt der zweiten Öffnung berührt, der der Abschnitt der zweiten Öffnung ist, der in der Draufsicht, in der der Dachabschnitt aus der Richtung der Mittelachse des Zylinders gesehen wird, am nächsten beim Einlassanschluss ist.

## Revendications

1. Moteur à combustion interne comprenant :
un cylindre définissant une chambre de combustion ;
une section de plafond (3) de la chambre de combustion raccordée à chacun parmi un orifice d'admission (1) et un orifice d'échappement (4), l'air d'admission s'écoulant dans la chambre de combustion par l'orifice d'admission et le gaz d'échappement étant déchargé de la chambre de combustion ;
une paroi de guidage (31) prévue dans la section de plafond de la chambre de combustion et la paroi de guidage étant raccordée à une première ouverture (10) de l'orifice d'admission et une seconde ouverture (40) de l'orifice d'admission ; et
un évidement (32) prévu dans une partie de la paroi de guidage et l'évidement étant enfoncé dans une direction pour se séparer d'un axe central du cylindre, afin d'augmenter un volume interne de la chambre de combustion, dans lequel :
une surface interne de l'évidement est inclinée de sorte qu'une extrémité inférieure de l'évidement est plus éloignée de l'axe central du cylindre qu'une extrémité supérieure de l'évidement, et
l'évidement est enfoncé au maximum dans une deuxième position (312) dans laquelle l'évidement croise une première tangente de la première ouverture, la première tangente est en contact avec une première partie de la première ouverture de l'orifice d'admission, et la première partie étant la partie la plus proche de la première ouverture par rapport à l'orifice d'échappement, sur une vue en plan dans laquelle la section de plafond est observée dans une direction de l'axe central du cylindre.

2. Moteur à combustion interne selon la revendication 1, dans lequel :
un degré de l'évidement est progressivement réduit vers la seconde ouverture de l'orifice d'échappement, et
l'évidement est enfoncé dans une plage allant d'une première position (311) à une troisième position (313), l'évidement est en contact avec la première ouverture dans la première position, la troisième position est plus proche de l'orifice d'admission qu'une position dans laquelle la paroi de guidage est en contact avec la seconde ouverture de l'orifice d'admission, la troisième position est une position dans laquelle l'évidement croise une seconde tangente de la seconde ouverture, la seconde tangente est en contact avec une seconde partie de la seconde ouverture qui est la partie la plus proche de la seconde ouverture par rapport à l'orifice d'admission, sur la vue en plan sur laquelle la section de plafond est observée dans la direction de l'axe central du cylindre.
